# EUROPEAN PATENT SPECIFICATION

(11) **EP 2 922 126 B1**
(45) Date of publication and mention of the grant of the patent: **28.06.2017**
(21) Application number: 15158552.8
(22) Date of filing: 11.03.2015
(51) Int. Cl.: H01M 4/88, B05D 1/26, B05C 5/02, H01M 8/1018

(54) **INTERMITTENT COATING METHOD AND INTERMITTENT COATING APPARATUS**
VERFAHREN ZUR PERIODISCHEN BESCHICHTUNG UND VORRICHTUNG ZUR PERIODISCHEN BESCHICHTUNG
PROCÉDÉ ET APPAREIL D'APPLICATION INTERMITTENTE DE REVÊTEMENT

(30) Priority: 20.03.2014 JP 2014057367
(43) Date of publication of application: 23.09.2015
(73) Proprietor: SCREEN Holdings Co., Ltd., Kyoto 602-8585 (JP)
(72) Inventor: Takagi, Yoshinori, Kypoto-shi, Kyoto 602-8585 (JP)
(74) Representative: Kilian Kilian & Partner

(56) References cited:
- JP-A- H07 275 786
- JP-A- 2002 113 411
- JP-A- 2007 066 744
- JP-A- 2012 030 193
- US-A1- 2010 051 181

## Description

### BACKGROUND OF THE INVENTION

### Field of the Invention

The present invention relates to an intermittent coating method and an intermittent coating apparatus for intermittently applying a coating liquid to the front surface of a base material, while causing the base material to travel continuously in a roll-to-roll process.

### Description of the Background Art

In recent years, fuel cells have attracted attention as drive power sources mainly for automobiles, household use, and mobile phones. The fuel cell refers to the power-generation system of producing electric power through an electrochemical reaction between hydrogen (H₂) in the fuel and oxygen (O₂) in the air, which advantageously has high power-generation efficiency and a low environmental burden.

The fuel cells come in a variety of types depending on an electrolyte for use, one example of which is a polymer electrolyte fuel cell (PEFC) that uses an ion-exchange membrane (electrolyte membrane) as an electrolyte. The PEFCs, which can be operated at room temperature and can be reduced in size and weight, are expected to be applied to automobiles and portable devices.

A typical PEFC is a lamination of a plurality of cells. In one cell (unit cell), both sides of a membrane-electrode-assembly (MEA) are sandwiched between a pair of separators. The MEA is obtained by disposing gas diffusion layers on both sides of a catalyst-coated membrane (CCM) including catalyst layers on both sides of a thin film (polyelectrolyte membrane) of an electrolyte. The catalyst layer and the gas diffusion layer disposed on the both sides of the polyelectrolyte membrane form a pair of electrode layers, one of which being an anode electrode and the other being a cathode electrode. When the anode electrode contacts with a hydrogen-containing fuel gas and the cathode electrode contacts with the air, an electrochemical reaction occurs to produce electric power.

Such a CCM is typically produced by applying a catalyst ink (electrode paste), in which catalyst particles containing platinum (Pt) are dissolved in a solvent such as alcohol, to the front surface of an electrolyte membrane while continuously transporting the electrolyte membrane in a roll-to-roll process and then drying the catalyst ink. The application of a catalyst ink for the PEFC requires intermittent coating of intermittently applying a catalyst ink to the front surface of an electrolyte membrane to eliminate a loss of an expensive platinum catalyst. Intermittent coating needs to sufficiently apply a catalyst ink to a target region to be applied with an ink, that is, to cover the entire coating region while preventing the ink from protruding from the coating region.

To provide a coating device capable of appropriately controlling a pressure of a coating liquid in a flow passage, and a manufacturing method of an electrode capable of forming the electrode of a high quality with a superior yield by using this, JP 2007 066744 A proposes that a coating liquid is supplied to a flow passage in a coating part, and an electrode layer is formed at a current collector by ejecting the liquid from an ejecting hole. A retaining groove and a shutoff member are installed at a boundary between the flow passage and the ejecting hole. In a process of forming the electrode layer, by the contact of a closed face of the shutoff member with the upper wall face of the ejecting hole in the retaining groove, shut off is made between the flow passage and the ejecting hole. In a process of forming an exposed region, by separating the closed face of the shutoff member from the upper wall face, the flow passage and the ejecting hole are communicated. A pressure adjustment valve is opened and closed in cooperation with a shutoff mechanism, and a size of a gap between the coating part and the current collector is changed by a moving mechanism.

Japanese Patent Application Laid-Open No. 07-275786 (1995) discloses the technique of intermittently applying, from a slit nozzle, a coating to a base material supported on a backup roller while causing the base material to travel continuously. The technique disclosed in Japanese Patent Application Laid-Open No. 07-275786 (1995) moves the slit nozzle to be apart from the backup roller during intermittent coating or moves the slit nozzle to be close to the backup roller during coating, thereby obtaining linear coating start and terminal ends.

Japanese Patent Application Laid-Open Nos. 2007-190483 and 2007-208140 propose to perform a coating process by supplying a processing liquid to a substrate from a nozzle while moving the substrate relative to the nozzle, which is not a continuous transport in a roll-to-roll process, and adjusting a gap between the nozzle and the substrate in the final stage of coating, thereby improving coating quality.

### SUMMARY OF THE INVENTION

The present invention is defined by the features of independent claims 1 and 7 and is directed to an intermittent coating method of intermittently applying a coating liquid to a base material sent out from a first roller while causing the base material to travel continuously by winding the base material around a second roller.

In one aspect of the present invention, the intermittent coating method includes the steps of (a) bringing a slit nozzle having a liquid pool of a coating liquid formed at its tip to be close to a base material supported on a backup roller, in which a spacing between the tip of the slit nozzle and a front surface of the base material is a first spacing with which the liquid pool comes into contact with the front surface of the base material, (b) moving the slit nozzle such that the spacing between the tip of the slit nozzle and the front surface of the base material is equal to a second spacing different from the first spacing after the liquid pool comes into contact with the front surface of the base material, and (c) applying a coating liquid to the front surface of the base material from the slit nozzle while keeping the spacing between the tip of the slit nozzle and the front surface of the base material at the second spacing, wherein said first spacing in said step (a) is set to become larger and the liquid pool formed at the tip of said slit nozzle in said step (a) becomes larger with a larger film thickness of a coating formed on the front surface of said base material in said step (c). This allows the coating liquid to be suitably applied to a target area on the base material at the start of coating, obtaining a uniform coating shape also at the start of coating.

Preferably, at the completion of the step (c), the slit nozzle is moved such that the spacing between the tip of the slit nozzle and the front surface of the base material is equal to a third spacing smaller than the second spacing.

This obtains a uniform coating shape also at the completion of coating.

Preferably, the base material is an electrolyte membrane for a fuel cell, and the coating liquid is a catalyst ink containing catalyst particles of platinum or platinum alloy.

This reduces a wasteful consumption of the catalyst ink containing catalyst particles of expensive platinum or platinum alloy.

The present invention is also directed to an intermittent coating apparatus that intermittently applies a coating liquid to a base material sent out from a first roller, while winding the base material around a second roller to cause the base material to travel continuously.

In one aspect of the present invention, the intermittent coating apparatus includes a backup roller that supports the base material running, a slit nozzle that applies a coating liquid to the base material supported on the backup roller, a drive part that moves the slit nozzle to be close to or apart from the backup roller, and a control part that controls the drive part, the control part being configured to control the drive part to cause the slit nozzle to apply the coating liquid to the front surface of the base material by bringing the slit nozzle having a liquid pool of the coating liquid formed at its tip to be close to the base material supported on the backup roller such that the spacing between the tip of the slit nozzle and the front surface of the base material is equal to a first spacing, with which the liquid pool comes into contact with the front surface of the base material, and by moving the slit nozzle such that the spacing between the tip of the slit nozzle and the front surface of the base material is equal to a second spacing different from the first spacing after the liquid pool comes into contact with the front surface of the base material, wherein said control part is further configured to set said first spacing to become larger and to set the liquid pool formed at the tip of said slit nozzle to become larger with a larger film thickness of a coating formed on the surface of said base material by applying a coating liquid from said slit nozzle while keeping the spacing between said tip of said slit nozzle and the front surface of said base material at said second spacing. This allows the coating liquid to be suitably applied to a target area on the base material at the start of coating, obtaining a uniform coating shape also at the start of coating.

Preferably, at the completion of coating from the slit nozzle, the control part controls the drive part to move the slit nozzle such that the spacing between the tip of the slit nozzle and the front surface of the base material is equal to a third spacing smaller than the second spacing.

This achieves a uniform coating shape also at the completion of coating.

Preferably, the base material is an electrolyte membrane of a fuel cell, and the coating liquid is a catalyst ink containing catalyst particles of platinum or platinum alloy.

This reduces a wasteful consumption of the catalyst ink containing catalyst particles of expensive platinum or platinum alloy.

The present invention therefore has an object to obtain a uniform coating shape also at the start of coating.

The object is achieved by the subject matter of the independent claims. Further advantageous embodiments are the subject matter of the dependent claims.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 shows a schematic configuration of an intermittent coating apparatus according to the present invention;
FIG. 2 is an enlarged view of a portion around a coating nozzle and a backup roller;
FIG. 3 is a plan view schematically showing the state where a catalyst ink is intermittently applied to the front surface of an electrolyte membrane;
FIGS. 4A and 4B show the state where a liquid pool of a catalyst ink is formed at the tip of the coating nozzle;
FIGS. 5A and 5B show the coating shape of a coating formed when the coating nozzle is merely caused to be close to an electrolyte membrane;
FIG. 6 is a flowchart showing the procedure of applying a catalyst ink to an electrolyte membrane travelling at a constant speed in the intermittent coating apparatus of FIG. 1;
FIG. 7 shows control of the spacing between the tip of the coating nozzle and the front surface of the electrolyte membrane when a contact gap is larger than a coating gap;
FIG. 8 shows control of the spacing between the tip of the coating nozzle and the front surface of the electrolyte membrane when the contact gap is smaller than the coating gap;
FIG. 9 shows the state where a coating nozzle having a relatively large liquid pool moves to a contact gap larger than the coating gap and the liquid pool is in contact with the electrolyte membrane;
FIG. 10 shows the state where the coating nozzle steadily performs a coating process with the coating gap;
FIG. 11 shows the state where a coating nozzle having a relatively small liquid pool moves to a contact gap smaller than the coating gap and the liquid pool is in contact with the electrolyte membrane; and
FIG. 12 shows a coating shape of a coating formed by an intermittent coating technique according to the present invention.

### DESCRIPTION OF EMBODIMENT

Hereinafter, an embodiment of the present invention will be described in detail with reference to the drawings.

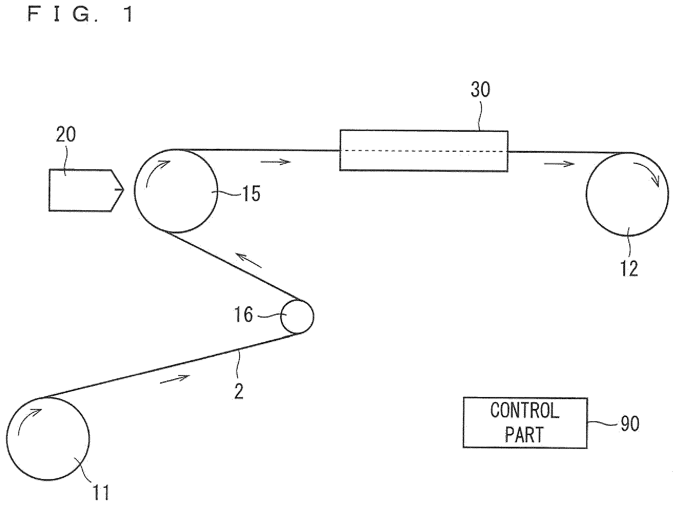

FIG. 1 shows a schematic configuration of an intermittent coating apparatus 100 according to the present invention. For easy understanding, the dimensions and the numbers of various components are exaggerated or simplified in FIG. 1 and the subsequent drawings. The intermittent coating apparatus 100 intermittently applies a catalyst ink as a coating liquid to the front surface of a belt-shaped electrolyte membrane 2 being a base material while continuously transporting the electrolyte membrane 2 in a roll-to-roll process. Then, the apparatus 100 dries the catalyst ink and forms a catalyst layer (electrode layer) on the front surface of the electrolyte membrane 2, thereby manufacturing a catalyst-coated membrane for a polymer electrolyte fuel cell. The front surface of the electrolyte membrane 2 is one of two surfaces of the electrolyte membrane 2, on which a catalyst layer of an anode electrode or a cathode electrode is formed. Meanwhile, the rear surface of the electrolyte membrane 2 is the other of the two surfaces, opposite to the front surface, on which a catalyst layer having a polarity opposite to that of the front surface is formed. That is, the front surface and the rear surface are expressions for merely distinguishing the both surfaces of the electrolyte membrane 2, and any specific surface is not limited to the front surface or the rear surface.

The intermittent coating apparatus 100 includes, as its main elements, an unwinding roller 11, a backup roller 15, a coating nozzle 20, a drying furnace 30, and a winding roller 12. The intermittent coating apparatus 100 also includes a control part 90 that manages the overall apparatus.

The unwinding roller 11, around which the electrolyte membrane 2 having a backsheet attached thereto for protection is wound, continuously sends out the electrolyte membrane 2 as a base material. The electrolyte membrane 2, sent out from the unwinding roller 11, is wound around the winding roller 12 and is caused to travel continuously at a constant speed in the order of the coating nozzle 20 to the drying furnace 30 in a roll-to-roll process. The auxiliary roller 16 guides the electrolyte membrane 2 sent out from the unwinding roller 11 such that it travels along a predetermined transport path. Any number of auxiliary rollers 16 may be provided and the auxiliary roller 16 may be provided in any position.

The electrolyte membrane 2 may be fluorine-based or hydrocarbon-based polyelectrolyte membranes that have been used for catalyst-coated membranes of polymer electrolyte fuel cells. For example, the electrolyte membrane 2 may be a polyelectrolyte membrane containing perfluorocarbon sulfonic acid (e.g., Nation (registered trademark) manufactured by USA DuPont, Flexion (registered trademark) manufactured by Asahi Glass Co. Ltd, Aciplex (registered trademark) manufactured by Asahi Kasei Corporation, and Goreselect (registered trademark) manufactured by Gore).

The electrolyte membrane 2 described above, which is very thin and has a low mechanical strength, has the characteristics of easily swelling even with a small amount of moisture in the air and shrinking with lower humidity, and thus, is extremely prone to deformation. For this reason, in the initial state, the electrolyte membrane 2 with a backsheet is wound around the unwinding roller 11 to prevent deformation of the electrolyte membrane 2. The backsheet may be a film of a resin material having high mechanical strength and an excellent shape-holding function, such as PEN (polyethylene naphthalate) and PET (polyethylene terephthalate). In this embodiment, the backsheet is attached to the rear surface of the electrolyte membrane 2.

The initial-state electrolyte membrane 2 with the backsheet, which is wound around the unwinding roller 11, has a film thickness of 5 to 30 µm and a width of up to approximately 300 mm. The backsheet has a film thickness of 25 to 100 µm and has a width slightly larger than the width of the electrolyte membrane 2. The width of the backsheet may be the same as the width of the electrolyte membrane 2.

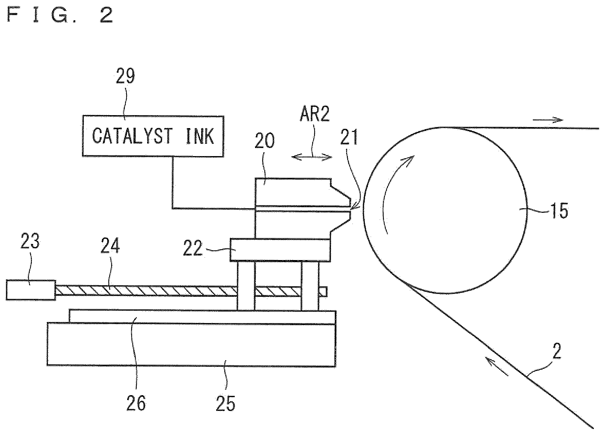

The coating nozzle 20 and the drying furnace 30 are provided in the stated order at midpoints of the transport path for the electrolyte membrane 2, which extends from the unwinding roller 11 to the winding roller 12. FIG. 2 is an enlarged view of the portion around the coating nozzle 20 and the backup roller 15. The coating nozzle 20 is a slit nozzle having a slit-shaped discharge port 21 along the width direction of the electrolyte membrane 2.

The coating nozzle 20 is mounted to a base frame 22 such that its discharge direction from the discharge port 21 extends substantially along the horizontal direction. The base frame 22 is threaded with a ball screw 24 that is rotated by a drive motor 23. The base frame 22 is slidably mounted to a guide rail 26 placed on a base 25. When the drive motor 23 rotates the ball screw 24 in the forward direction or reverse direction, the base frame 22 is guided by the guide rail 26 to slidably move back and forth. This causes the coating nozzle 20 mounted to the base frame 22 to advance or retract so as to be close to or away from the backup roller 15, as indicated by the arrow AR2. The coating nozzle 20 may be provided with a mechanism that adjusts its posture relative to the backup roller 15.

The backup roller 15 is opposed to the coating nozzle 20 with the electrolyte membrane 2 therebetween. The backup roller 15 is rotatably provided such that its rotation axis extends horizontally in parallel to the slit-shaped discharge port 21 of the coating nozzle 20. The backup roller 15 supports the rear surface of the electrolyte membrane 2 that is sent out from the unwinding roller 11 and travels continuously. More technically, the backup roller 15 comes into direct contact with the backsheet attached to the rear surface of the electrolyte membrane 2 to support the electrolyte membrane 2. Thus, the coating nozzle 20 is provided such that the discharge port 21 thereof faces the front surface of the electrolyte membrane 2 supported on the backup roller 15.

The backup roller 15 is fixed in the direction perpendicular to the rotation axis, stabilizing the position of the electrolyte membrane 2 supported on the backup roller 15. Thus, the constant position of the coating nozzle 20 leads to the stable, constant spacing between the electrolyte membrane 2 supported on the backup roller 15 and the discharge port 21 of the coating nozzle 20.

The coating nozzle 20 is supplied with a catalyst ink as a coating liquid from an ink supply mechanism 29. The catalyst ink used in this embodiment contains, for example, catalyst particles, an ion-conducting electrolyte, and a dispersion medium. The catalyst particles may be any known or commercially available catalyst particles without any particular limitations, as long as they can cause a fuel cell reaction in the anode or cathode of a polymer electrolyte fuel cell. For example, platinum (Pt), a platinum alloy, a platinum compound, or the like may be used. Among them, examples of the platinum alloy include alloys of platinum with at least one selected from the group consisting of, for example, ruthenium (Ru), palladium (Pd), nickel (Ni), molybdenum (Mo), iridium (Ir), and iron (Fe). Platinum is generally used as the catalyst particles for the cathode catalyst ink, and any of the above-mentioned platinum alloys is used as the catalyst particles for the anode catalyst ink.

Alternatively, the catalyst particles may be so-called catalyst-supporting carbon powder in which catalyst fine particles are supported on carbon powder. The average particle diameter of the catalyst-supporting carbon is usually about 10 to 100 nm, preferably about 20 to 80 nm, most preferably about 40 to 50 nm. There is no particular limitation on the carbon powder that supports the catalyst fine particles, and examples thereof include carbon blacks such as channel black, furnace black, ketjen black, acetylene black, and lamp black, graphite, activated carbon, carbon fiber, and carbon nanotube. They may be used alone or in combination of two or more.

The catalyst particles, to which a solvent is added, is used as a paste that can be applied from the slit nozzle. The solvent may be water or organic solvents including alcohol-based solvents such as ethanol, n-propanol and n-butanol, ether-based solvents, ester-based solvents, and fluorine-based solvents.

A polyelectrolyte solution having an ion-exchange group is further added to a solution obtained by dispersing the catalyst particles in the solvent. In one example, a catalyst ink can be obtained by dispersing carbon black that supports 50 wt% of platinum ("TEC10E50E" manufactured by TANAKA KIKINZOKU KOGYO K.K.) in a solution of water, ethanol, and polyelectrolyte solution (Nafion liquid "D2020" manufactured by USA DuPont). The resultant paste mixture is supplied as a catalyst ink from the ink supply mechanism 29 to the coating nozzle 20.

The coating nozzle 20 discharges the catalyst ink supplied from the ink supply mechanism 29 from the discharge port 21 and applies the catalyst ink to the front surface of the electrolyte membrane 2 travelling while being supported on the backup roller 15. The coating nozzle 20, which is capable of continuous coating when continuously discharging a catalyst ink or intermittent coating when intermittently discharging a catalyst ink, performs intermittent coating in this embodiment. The discharge flow rate of the catalyst ink discharged from the coating nozzle 20 is adjusted by the control part 90 controlling, for example, the pump of the ink supply mechanism 29.

Referring back to FIG. 1, the drying furnace 30 is provided downstream of the coating nozzle 20 at some midpoint of the transport path of the electrolyte membrane 2. The drying furnace 30 blows hot air of 70°C to 120°C toward the electrolyte membrane 2 passing therethrough and heats the electrolyte membrane 2, thereby drying the catalyst ink applied to the front surface of the electrolyte membrane 2. The drying evaporates the solvent from the catalyst ink to form a catalyst layer. The drying furnace 30 may be a known hot-air drying furnace or a drying furnace using far infrared, near infrared, or superheated stem, in addition to hot-air drying.

The electrolyte membrane 2 that has passed through the drying furnace 30 is wound around the winding roller 12. The winding roller 12 winds the electrolyte membrane 2 having a catalyst layer formed on its front surface, with its rear surface having the backsheet attached thereto. The winding roller 12 provides a constant tension to the electrolyte membrane 2 with the backsheet sent out from the unwinding roller 11.

The control part 90 has a hardware configuration similar to that of a general-purpose computer. More specifically, the control part 90 includes a CPU that performs various computation processes, a ROM being a read-only memory that stores a basic program, a RAM being a readable and rewritable memory that stores various types of information, and a magnetic disk that stores control software, data, and the like. The various operation mechanisms provided in the intermittent coating apparatus 100 are controlled by the CPU of the control part 90 executing a predetermined processing program, so that the process of forming a catalyst layer proceeds.

Next, the details of the operation of the intermittent coating apparatus 100 configured as described above will be described. In the intermittent coating apparatus 100 according to this embodiment, the winding roller 12 winds the electrolyte membrane 2 being a base material sent out from the unwinding roller 11, causing the electrolyte membrane 2 to travel continuously at a constant speed in a roll-to-roll process. Then, while the electrolyte membrane 2 is travelling continuously, a catalyst ink is applied as a coating liquid to the front surface of the electrolyte membrane 2 from the coating nozzle 20. During the coating, the coating nozzle 20 performs intermittent coating of intermittently applying a catalyst ink to the electrolyte membrane 2 travelling at a constant speed.

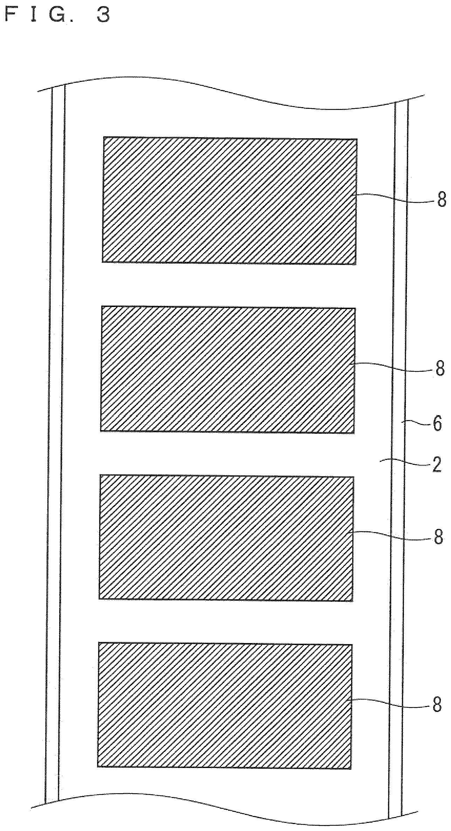

FIG. 3 is a plan view schematically showing the state where a catalyst ink is intermittently applied to the front surface of an electrolyte membrane. The catalyst ink is intermittently discharged from the coating nozzle 20 toward the front surface of the electrolyte membrane 2 with the backsheet 6, travelling at a constant speed, from the unwinding roller 11 toward the winding roller 12. Consequently, as shown in FIG. 3, rectangular coatings 8 of the catalyst ink that have a constant size are equidistantly formed on the front surface of the electrolyte membrane 2 in a non-continuous manner. The width of each coating 8 formed on the front surface of the electrolyte membrane 2 is defined by the width of the slit-shaped discharge port 21 of the coating nozzle 20. The length of each coating 8 is defined by the catalyst ink discharge time of the coating nozzle 20 and the transport speed of the electrolyte membrane 2. The catalyst ink is a paste that can be applied from the coating nozzle 20 and a viscosity high enough to keep the shape of the coating 8 on the electrolyte membrane 2.

To perform intermittent coating as shown in FIG. 3 on the electrolyte membrane 2 travelling at a constant speed, it is necessary to cause a catalyst ink to flow from the discharge port 21 to form a liquid pool of the catalyst ink at the tip of the coating nozzle 20 before the coating start end of a coating area (an area on the electrolyte membrane 2, to which a catalyst ink is to be supplied) arrives at the position opposed to the discharge port 21 of the coating nozzle 20. The reason for the above is as follows. Unlike the inventions described in Japanese Patent Application Laid-Open Nos. 2007-190483 and 2007-208140, in the intermittent coating apparatus 100, the relative velocity between the nozzle and the base material when coating is started is not zero, and the electrolyte membrane 2 is continuously running at a constant speed. There is therefore no time to start discharging a catalyst ink after the coating start end of the coating area arrives at the position opposed to the discharge port 21.

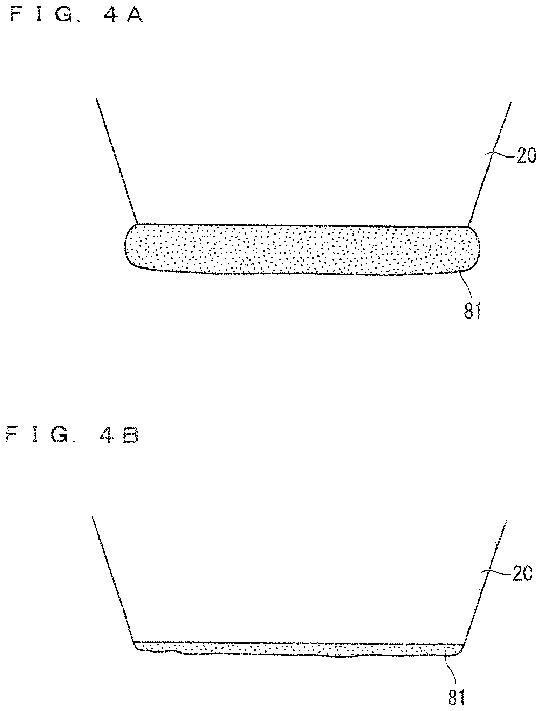

FIGS. 4A and 4B show the state where a liquid pool 81 of a catalyst ink is formed at the tip of the coating nozzle 20. The size of the liquid pool 81 of the catalyst ink, which is preliminarily formed at the tip of the coating nozzle 20, varies depending on the film thickness of the coating 8 to be formed on the front surface of the electrolyte membrane 2. In the formation of a thick coating 8, as shown in FIG. 4A, a relatively large liquid pool 81 needs to be formed at the tip of the coating nozzle 20. Contrastingly, in the formation of a thin coating 8, as shown in FIG. 4B, a relatively small liquid pool 81 needs to be formed at the tip of the coating nozzle 20.

In intermittent coating to the electrolyte membrane 2 travelling at a constant speed, the coating nozzle 20 having a liquid pool 81 of the catalyst ink at its tip is brought to be close to the electrolyte membrane 2, and the liquid pool 81 is brought into contact with the coating start end of the coating area. Through such coating, a catalyst ink can be reliably applied from the coating start end of the coating area of the electrolyte membrane 2 travelling continuously.

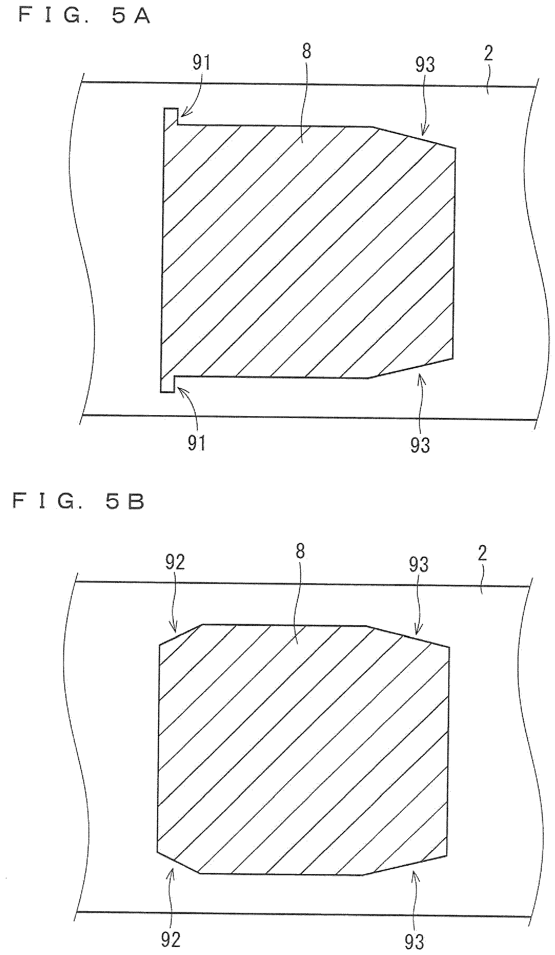

Unfortunately, malfunctions as shown in FIGS. 5A and 5B occur by merely bringing the coating nozzle 20 to be close to the electrolyte membrane 2 to bring the liquid pool 81 into contact with the coating area. FIGS. 5A and 5B show the coating shape of the coating 8, which is formed when the coating nozzle 20 is merely brought to be close to the electrolyte membrane 2 to bring the liquid pool 81 into contact with the coating area. When a relatively large liquid pool 81 as shown in FIG. 4A is brought into contact with the coating start end of the coating area of the electrolyte membrane 2, as shown in FIG. 5A, protrusions 91 of the catalyst ink occur at the coating start end. This is because a large quantity of liquid pool 81 is pressed between the tip of the coating nozzle 20 and the electrolyte membrane 2 and then spreads outwardly. The protrusion 91 of a catalyst ink occurs for a large fluid volume of the liquid pool 81 as well as for a relatively low front surface tension of a catalyst ink. In FIGS. 5A and 5B, the left and right ends of the coating 8 are a coating start end and a coating termination end, respectively.

Meanwhile, when a relatively small liquid pool 81 as shown in FIG. 4B is brought into contact with the coating start end of the coating area of the electrolyte membrane 2, as shown in FIG. 5B, shrinkages 92 of the catalyst ink occur at the coating start end. This is because the fluid volume of the liquid pool 81 is insufficient to fill the spacing between the tip of the coating nozzle 20 and the electrolyte membrane 2. The shrinkage 92 of a catalyst ink occurs for a small fluid volume of the liquid pool 81 as well as when for a relatively high front surface tension of a catalyst ink.

As shown in FIGS. 5A and 5B, shrinkages 93 of the catalyst ink occur at the coating termination end of the coating area. This is because the discharge flow rate of the catalyst ink from the coating nozzle 20 decreases as closer to the coating termination end. Between the coating start end and the coating termination end of the coating area, the catalyst ink discharged from the coating nozzle 20 at a constant discharge flow rate spreads between the coating nozzle 20 and the electrolyte membrane 2 through a capillary action, and the catalyst ink is regulated from spreading excessively by the tip portion of the coating nozzle 20, enabling stable coating without protrusion or shrinkage.

When the coating shape is not uniform as shown in FIGS. 5A and 5B, a catalyst ink containing expensive platinum as catalyst particles may be used wastefully or the power generation performance of a fuel cell may decrease. The present invention therefore achieves a uniform coating shape as follows.

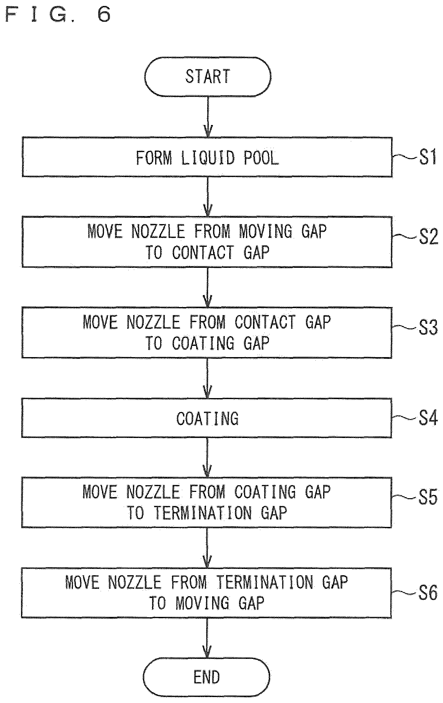

FIG. 6 is a flowchart showing the procedure of applying a catalyst ink to the electrolyte membrane 2 travelling at a constant speed in the intermittent coating apparatus 100. The procedure of applying a catalyst ink described below proceeds by the control part 90 controlling each operation mechanism of the intermittent coating apparatus 100.

The intermittent coating apparatus 100 winds the electrolyte membrane 2 sent out from the unwinding roller 11 around the winding roller 12, causing the electrolyte membrane 2 to travel continuously at a constant speed (in this embodiment, for example, 100 mm/s). While the electrolyte membrane 2 is travelling continuously, a catalyst ink is intermittently applied to the front surface of the electrolyte membrane 2 from the coating nozzle 20. The catalyst ink applied to the electrolyte membrane 2 of a polymer electrolyte fuel cell is the ink described above, which contains, for example, catalyst particles such as platinum or platinum alloy, an ion-conducting electrolyte, and a dispersion medium. The catalyst ink applied from the coating nozzle 20 may be one for a cathode or an anode. The catalyst ink has a viscosity of, for example, 0.05 Pa·s (pascal-second) and a solid concentration of, for example, 15 vol%.

First, as shown in FIGS. 4A and 4B, a liquid pool 81 of a catalyst ink is formed at the tip of the coating nozzle 20 during an intermission of coating, that is, between the completion of one coating to the initiation of the next coating by the coating nozzle 20 (Step S1). As described above, in the formation of a relatively thick coating 8 on the front surface of the electrolyte membrane 2, a relatively large liquid pool 81 is formed at the tip of the coating nozzle 20 (FIG. 4A). Meanwhile, in the formation of a relatively thin coating 8 on the front surface of the electrolyte membrane 2, a relatively small liquid pool 81 is formed at the tip of the coating nozzle 20 (FIG. 4B).

During an intermission of coating, the coating nozzle 20 is positioned such that the spacing between the tip of the coating nozzle 20 and the front surface of the electrolyte membrane 2 is equal to a moving gap IG. The moving gap IG is approximately 500 µm to 3 mm.

Then, the control part 90 controls the drive motor 23 to start moving the coating nozzle 20 immediately before the coating start end of the coating area of the electrolyte membrane 2 arrives at the position opposed to the discharge port 21 of the coating nozzle 20, bringing the coating nozzle 20 to be close to the electrolyte membrane 2 supported on the backup roller 15. At this time, the coating nozzle 20 is moved such that the spacing between the tip of the coating nozzle 20 and the front surface of the electrolyte membrane 2 changes from the moving gap IG to a contact gap (first spacing) SG (Step S2). The contact gap SG is the spacing between the tip of the coating nozzle 20 and the front surface of the electrolyte membrane 2, with which the liquid pool 81 formed at the tip of the coating nozzle 20 comes into contact with the front surface of the electrolyte membrane 2 supported on the backup roller 15.

The coating nozzle 20 is moved to the contact gap SG at the timing and the moving speed at which the liquid pool 81 formed at the tip of the coating nozzle 20 comes into contact with the coating start end of the coating area of the electrolyte membrane 2. The moving speed of the coating nozzle 20 when it is moved from the moving gap IG to the contact gap SG is, for example, 25 mm/s. Moving the coating nozzle 20 such that the spacing between the tip of the coating nozzle 20 and the front surface of the electrolyte membrane 2 is equal to the contact gap SG is simply referred to as moving the coating nozzle 20 to the contact gap SG (similar expression may be given below).

Subsequently, immediately after the liquid pool 81 of the catalyst ink comes into contact with the front surface of the electrolyte membrane 2, the coating nozzle 20 is moved such that the spacing between the tip of the coating nozzle 20 and the front surface of the electrolyte membrane 2 changes from the contact gap SG to a coating gap (second spacing) TG (Step S3). The coating gap TG is the spacing between the tip of the coating nozzle 20 and the front surface of the electrolyte membrane 2 when a catalyst ink is discharged from the coating nozzle 20 and the catalyst ink is steadily applied to the front surface of the electrolyte membrane 2.

The contact gap SG and the coating gap TG have different setting values. The contact gap SG is set to a larger value with a larger film thickness of the coating 8 formed on the front surface of the electrolyte membrane 2 through application of a catalyst ink from the coating nozzle 20 in Step S4 described below. When the film thickness of the coating 8 formed on the front surface of the electrolyte membrane 2 through coating in Step S4 is larger than a predetermined value, the contact gap SG is set to a value larger than the coating gap TG. Contrastingly, when the film thickness of the coating 8 formed on the front surface of the electrolyte membrane 2 through coating in Step S4 is not larger than the predetermined value, the contact gap SG is set to a value smaller than the coating gap TG.

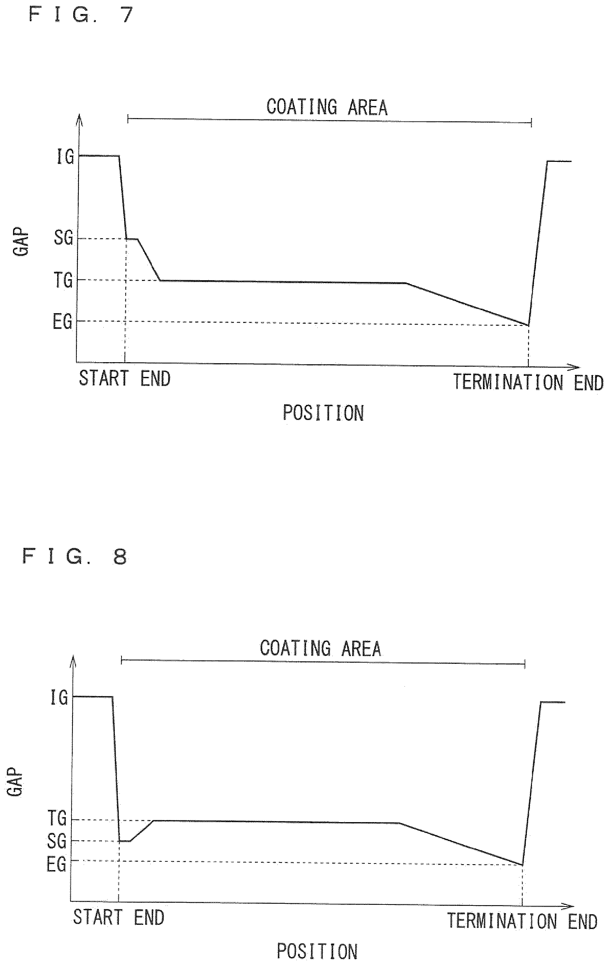

FIG. 7 shows control of the spacing between the tip of the coating nozzle 20 and the front surface of the electrolyte membrane 2 in the case where the contact gap SG is larger than the coating gap TG. FIG. 8 shows control of the spacing between the tip of the coating nozzle 20 and the front surface of the electrolyte membrane 2 in the case where the contact gap SG is smaller than the coating gap TG. In FIGS. 7 and 8, the horizontal axis represents the position of the electrolyte membrane 2 that faces the discharge port 21 of the coating nozzle 20, and the vertical axis represents the spacing between the tip of the coating nozzle 20 and the front surface of the electrolyte membrane 2.

The coating nozzle 20 moves such that the spacing between the tip of the coating nozzle 20 and the front surface of the electrolyte membrane 2 is equal to the contact gap SG at the time when the discharge port 21 of the coating nozzle 20 is opposed to the coating start end of the coating area of the electrolyte membrane 2. In the case where the film thickness of the coating 8 formed on the front surface of the electrolyte membrane 2 is larger than a predetermined value, the coating nozzle 20 moves to the contact gap SG larger than the coating gap TG, bringing the liquid pool 81 to contact with the coating start end of the coating area of the electrolyte membrane 2 (FIG. 7). After the liquid pool 81 of the catalyst ink comes into contact with the front surface of the electrolyte membrane 2, the coating nozzle 20 is at rest at the contact gap SG for a short time period and then moves from the contact gap SG to a coating gap TG smaller than the contact gap SG. In one example, the coating nozzle 20 starts moving from the contact gap SG to the coating gap TG 0.001 second after the coating nozzle 20 moves to the contact gap SG and the liquid pool 81 comes into contact with the coating start end of the coating area. If the electrolyte membrane 2 is travelling at 100 mm/s, the electrolyte membrane 2 travels 0.1 mm while the coating nozzle 20 is at rest at the contact gap SG for 0,001 second after the liquid pool 81 comes into contact with the electrolyte membrane 2.

The moving speed of the coating nozzle 20 when moving from the contact gap SG to the coating gap TG is, for example, 2 mm/s, and the contact gap SG and the coating gap TG are, for example, 150 µm and 100 µm, respectively. In this case, the moving time of the coating nozzle 20 from the contact gap SG to the coating gap TG is 0.025 second. If the electrolyte membrane 2 is travelling at 100 mm/s, the electrolyte membrane 2 travels 2.5 mm while the coating nozzle 20 is travelling from the contact gap SG to the coating gap TG. As a result, the coating nozzle 20 finishes the travel to the coating gap TG at the time when the tip of the coating nozzle 20 is opposed to the position approximately 2.6 mm away from the coating start end of the coating area.

After the coating nozzle 20 moves to the coating gap TG, a catalyst ink is applied to the coating area on the front surface of the electrolyte membrane 2 from the coating nozzle 20 while the spacing between the tip of the coating nozzle 20 and the front surface of the electrolyte membrane 2 is kept at the coating gap TG (Step S4). In the case of FIG. 7, as described above, a relatively large liquid pool 81 is preliminarily formed at the tip of the coating nozzle 20 and, with the contact gap SG larger than the coating gap TG during steady coating, the coating nozzle 20 brings the liquid pool 81 into contact with the coating start end of the coating area.

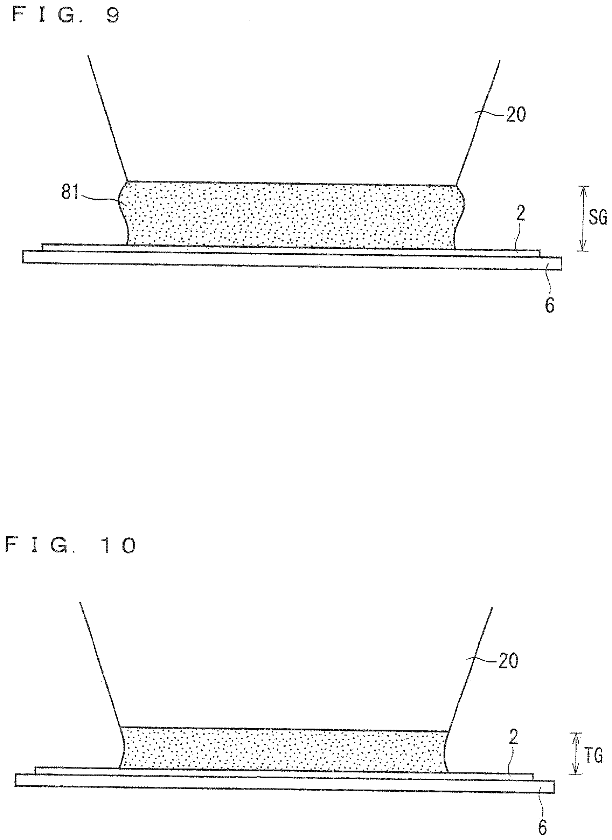

FIG. 9 shows the state where, in the formation of a relatively thick coating 8 on the front surface of the electrolyte membrane 2, the coating nozzle 20 having a relatively large liquid pool 81 moves to the contact gap SG larger than the coating gap TG, and the liquid pool 81 is in contact with the electrolyte membrane 2. The contact gap SG in this case, which is larger than the coating gap TG during steady coating, prevents the catalyst ink from being pressed between the tip of the coating nozzle 20 and the electrolyte membrane 2 even for a large fluid volume of the liquid pool 81, preventing the catalyst ink from spreading outwardly from the both ends in the width direction of the coating area. This eliminates the protrusions 91 of the catalyst ink at the coating start end of the coating area as shown in FIG. 5A.

FIG. 10 shows the state where the coating nozzle 20 performs a steady coating process with the coating gap TG. While the coating nozzle 20 discharges a catalyst ink toward the electrolyte membrane 2 travelling at a constant speed at a constant flow rate to perform a steady coating process, the catalyst ink spreads between the coating nozzle 20 and the electrolyte membrane 2 through the capillary action, and the catalyst ink is regulated from spreading outwardly from both ends in the width direction of the coating area by the tip portion of the coating nozzle 20. This enables stable coating with no protrusion or shrinkage.

The coating nozzle 20 starts moving such that the spacing between the tip of the coating nozzle 20 and the front surface of the electrolyte membrane 2 changes from the coating gap TG to the termination gap (third spacing) EG at the time when the coating nozzle 20 moves to the coating gap TG and completes a steady coating process for a predetermined time period (Step S5). The termination gap EG refers to the spacing between the tip of the coating nozzle 20 and the front surface of the electrolyte membrane 2 when the coating nozzle 20 stops discharging a catalyst ink to end the coating process. To terminate the coating process from the coating nozzle 20, the discharge flow rate of the catalyst ink from the coating nozzle 20 is gradually decreased. The coating nozzle 20 starts moving from the coating gap TG toward the termination gap EG immediately before starting decreasing the discharge flow rate of the catalyst ink. In one example, the coating nozzle 20 starts decreasing the discharge flow rate of a catalyst ink at the time when the discharge port 21 of the coating nozzle 20 is opposed to the position 10 mm in front of the coating termination end of the coating area of the electrolyte membrane 2. In this case, at the time when, for example, the discharge port 21 of the coating nozzle 20 is opposed to the position 11 mm in front of the coating termination end of the coating area of the electrolyte membrane 2, the coating nozzle 20 starts moving from the coating gap TG to the termination gap EG.

The termination gap EG is smaller than the coating gap TG. If the coating gap TG is 100 µm as in the example described above, the termination gap EG is, for example, 70 µm. The moving speed of the coating nozzle 20 when moving from the coating gap TG to the termination gap EG is, for example, 0.3 mm/s. In this case, the moving time of the coating nozzle 20 from the coating gap TG to the termination gap EG is approximately 0.1 second. If the electrolyte membrane 2 is travelling at 100 mm/s, the electrolyte membrane 2 travels 10 mm while the coating nozzle 20 is moving from the coating gap TG to the termination gap EG. As a result, the coating nozzle 20 completes moving to the termination gap EG. immediately before the discharge port 21 of the coating nozzle 20 is opposed to the coating termination end of the coating area.

Although the discharge flow rate of a catalyst ink from the coating nozzle 20 decreases as the coating nozzle 20 approaches the coating termination end of the coating area, the spacing between the tip of the coating nozzle 20 and the front surface of the electrolyte membrane 2 gradually narrows from the coating gap TG to the termination gap EG, preventing a catalyst ink from shrinking inwardly from the both ends in the width direction of the coating area. As a result, the shrinkages 93 of the catalyst ink at the coating termination end of the coating area, as shown in FIGS. 5A and 5B, can be eliminated.

After that, the discharge of a catalyst ink is stopped completely at the time when the discharge port 21 of the coating nozzle 20 is opposed to the coating termination end of the coating area of the electrolyte membrane 2, and the coating nozzle 20 starts moving such that the spacing between the tip of the coating nozzle 20 and the front surface of the electrolyte membrane 2 changes from the termination gap EG to the moving gap IG (Step S6). The moving speed of the coating nozzle 20 when being moved from the termination gap EG to the moving gap IG is, for example, 25 mm/s. Thereafter, the procedure of Steps S1 to S6 is repeated to intermittently apply a catalyst ink to the electrolyte membrane 2.

If the film thickness of the coating 8 formed on the front surface of the electrolyte membrane 2 is not larger than the predetermined value, the coating nozzle 20 moves to the contact gap SG smaller than the coating gap TG, bringing the liquid pool 81 into contact with the coating start end of the coating area of the electrolyte membrane 2 (FIG. 8). After the liquid pool 81 of the catalyst ink comes into contact with the front surface of the electrolyte membrane 2, the coating nozzle 20 is at rest at the contact gap SG for a short time period and then moves from the contact gap SG to the coating gap TG larger than the contact gap SG.

After that, as in FIG. 7, with the spacing between the tip of the coating nozzle 20 and the front surface of the electrolyte membrane 2 being kept at the coating gap TG, a catalyst ink is applied to the coating area on the front surface of the electrolyte membrane 2 from the coating nozzle 20 (Step S4). In the case of FIG. 8, as described above, a relatively small liquid pool 81 is preliminarily formed at the tip of the coating nozzle 20 and, with the contact gap SG smaller than the coating gap TG for steady coating, the coating nozzle 20 brings the liquid pool 81 into contact with the coating start end of the coating area.

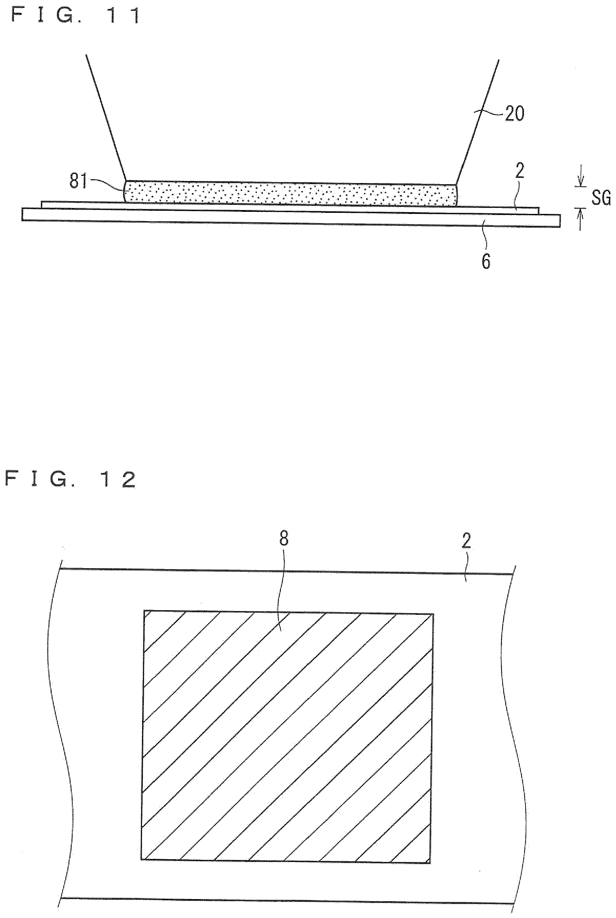

FIG. 11 shows the state where, in the formation of a relatively thin coating 8 on the front surface of the electrolyte membrane 2, the coating nozzle 20 having a relatively small liquid pool 81 moves to the contact gap SG smaller than the coating gap TG, and the liquid pool 81 is in contact with the electrolyte membrane 2. The contact gap SG in this case, which is smaller than the coating gap TG in steady coating, allows a catalyst ink to fill the spacing between the tip of the coating nozzle 20 and the electrolyte membrane 2 even if the liquid pool 81 has a small fluid volume, preventing the catalyst ink from shrinking inwardly from the both ends in the width direction of the coating area. As a result, the shrinkages 92 of the catalyst ink at the coating start end of the coating area, as shown in FIG. 5B, can be eliminated.

After that, as in FIG. 7, the coating nozzle 20 moves such that at the completion of a steady coating process, the spacing between the tip of the coating nozzle 20 and the front surface of the electrolyte membrane 2 changes from the coating gap TG to the termination gap EG (Step S5). Then, also as in FIG. 7, the coating nozzle 20 moves such that the spacing between the tip of the coating nozzle 20 and the front surface of the electrolyte membrane 2 changes from the termination gap EG to the moving gap IG at the time when the discharge port 21 of the coating nozzle 20 is opposed to the coating termination end of the coating area of the electrolyte membrane 2 (Step S6). Also in the case of FIG. 8, the procedure of Steps S1 to S6 is repeated to intermittently apply a catalyst ink to the electrolyte membrane 2.

When the electrolyte membrane 2 having a coating 8, which is formed by intermittently applying a catalyst ink thereto, is transported to the drying furnace 30 and passes therethrough, the coating 8 is subjected to a drying process. The coating 8 is subjected to the drying process by blowing hot air of 70°C to 120°C from the drying furnace 30 toward the coating 8. Blowing of hot air heats the coating 8 to volatilize the solvent component, drying the coating 8. The volatilization of the solvent component dries the coating 8 formed on the front surface of the electrolyte membrane 2 to form a catalyst layer. The electrolyte membrane 2 that has passed through the drying furnace 30 is wound around the winding roller 12.

In this embodiment, while the electrolyte membrane 2 being a base material is travelling continuously at a constant speed in a roll-to-roll process, a catalyst ink being a coating liquid is intermittently applied to the front surface of the electrolyte membrane 2 from the coating nozzle 20. Then, to intermittently apply a catalyst ink to the electrolyte membrane 2 travelling continuously at a constant speed, a liquid pool 81 of the catalyst ink is formed at the tip of the coating nozzle 20 during an intermission of coating. The size of the liquid pool 81 formed at the tip of the coating nozzle 20 at this time varies depending on the film thickness of the coating 8 to be formed on the front surface of the electrolyte membrane 2.

In the formation of a thick coating 8, a relatively large liquid pool 81 is formed at the tip of the coating nozzle 20, and the coating nozzle 20 moves such that the spacing between the tip of the coating nozzle 20 and the front surface of the electrolyte membrane 2 is equal to the contact gap SG larger than the coating gap TG at the start of coating, bringing the liquid pool 81 into contact with the coating start end of the coating area. Even for a relatively large liquid pool 81 having a large fluid volume, the contact gap SG between the tip of the coating nozzle 20 and the front surface of the electrolyte membrane 2 is larger than the coating gap TG, preventing a catalyst ink from protruding from the coating area.

Contrastingly, in the formation of a thin coating 8, a relatively small liquid pool 81 is formed at the tip of the coating nozzle 20, and the coating nozzle 20 moves such that at the start of coating, the spacing between the tip of the coating nozzle 20 and the front surface of the electrolyte membrane 2 is equal to the contact gap SG smaller than the coating gap TG, bringing the liquid pool 81 into contact with the coating start end of the coating area. Even for a relatively small liquid pool 81 having a small fluid volume, the contact gap SG between the tip of the coating nozzle 20 and the front surface of the electrolyte membrane 2 is smaller than the coating gap TG, preventing a catalyst ink from shrinking in the coating area.

The coating nozzle 20 moves such that at the start of coating, the spacing between the tip of the coating nozzle 20 and the front surface of the electrolyte membrane 2 is equal to the contact gap SG different from the coating gap TG, bringing the liquid pool 81 into contact with the coating start end of the coating area. This enables the suitable application of a catalyst ink to the coating area. This leads to a suitable, uniform coating shape at the start of coating when the electrolyte membrane 2 travelling continuously is subjected to intermittent coating. The contact gap SG becomes larger with a larger film thickness of the coating 8 formed on the front surface of the electrolyte membrane 2, and becomes larger than the coating gap TG when the film thickness becomes larger than a predetermined value. Contrastingly, when the film thickness of the coating 8 is not larger than the predetermined value, the contact gap SG becomes smaller than the coating gap TG.

At the completion of coating, the coating nozzle 20 moves such that the spacing between the tip of the coating nozzle 20 and the front surface of the electrolyte membrane 2 is equal to the termination gap EG smaller than the coating gap TG. At the completion of coating, the discharge flow rate of the catalyst ink from the coating nozzle 20 gradually decreases, and the spacing between the tip of the coating nozzle 20 and the front surface of the electrolyte membrane 2 also gradually narrows from the coating gap TG to the termination gap EG. This allows a catalyst ink to be suitably applied to the coating area. As a result, a suitable, uniform coating shape can be obtained also at the completion of intermittent coating.

As described above, the intermittent coating technique according to the present invention can obtain a suitable, uniform coating shape at the start and completion of coating to obtain a uniform shape of the overall coating 8. FIG. 12 shows the coating shape of the coating 8 formed by the intermittent coating technique according to the present invention. The comparison with FIGS. 5A and 5B reveals that no protrusion or shrinkage of a catalyst ink occurs at the coating start end and the coating termination end of the coating area, so that a uniform coating 8 is formed suitably in the coating area.

While the embodiment of the present invention has been described above, the present invention can be modified and varied without departing from the scope of the invention. For example, while the contact gap SG is defined depending on the film thickness of the coating 8 formed on the front surface of the electrolyte membrane 2 in the embodiment above, the contact gap SG may be defined depending on the front surface tension of a catalyst ink being a coating liquid. As described above, the front surface tension of a catalyst ink may cause malfunctions as shown in FIGS. 5A and 5B. The contact gap SG is set to become larger with a lower front surface tension of a catalyst ink, and the contact gap SG is set to become larger than the coating gap TG when its front surface tension falls below a predetermined value.

For a low front surface tension of a catalyst ink, the catalyst ink applied to the front surface of the electrolyte membrane 2 tends to spread to cause a protrusion as in the case of a large fluid volume of the liquid pool 81. Contrastingly, for a high front surface tension of a catalyst ink, a catalyst ink tends to shrink as in the case of a small fluid volume of the liquid pool 81.

Thus, for a front surface tension of a catalyst ink lower than a predetermined value, as in the formation of a thick coating 8, the coating nozzle 20 moves such that at the start of coating, the spacing between the tip of the coating nozzle 20 and the front surface of the electrolyte membrane 2 is equal to the contact gap SG larger than the coating gap TG, bringing the liquid pool 81 into contact with the coating start end of the coating area. If the catalyst ink has a low front surface tension, the catalyst ink is resistant to spreading because the contact gap SG between the tip of the coating nozzle 20 and the front surface of the electrolyte membrane 2 is larger than the coating gap TG, preventing the catalyst ink from protruding from the coating area.

Contrastingly, for a front surface tension of a catalyst ink not less than the predetermined value, as in the formation of a thin coating 8, the coating nozzle 20 moves such that at the start of coating, the spacing between the tip of the coating nozzle 20 and the front surface of the electrolyte membrane 2 is equal to the contact gap SG smaller than the coating gap TG, bringing the liquid pool 81 into contact with the coating start end of the coating area. For a high front surface tension of a catalyst ink, the catalyst ink tends to shrink, but the catalyst ink spreads between the coating nozzle 20 and the electrolyte membrane 2 through a capillary action because the contact gap SG between the tip of the coating nozzle 20 and the front surface of the electrolyte membrane 2 is smaller than the coating gap TG, preventing the catalyst ink from shrinking in the coating area. This also obtains a suitable, uniform coating shape at the start of coating when intermittent coating is performed to the electrolyte membrane 2 travelling continuously.

The technique according to the present invention is also applicable when a catalyst ink is intermittently applied to the rear surface of the electrolyte membrane 2 from which the backsheet 6 is separated. Catalyst inks having different polarities are intermittently applied to the front surface and the rear surface of the electrolyte membrane 2 to form catalyst layers, resulting in a catalyst-coated membrane.

The technique according to the present invention is applicable not only to the technique of intermittently applying a catalyst ink to the electrolyte membrane 2 of a fuel cell but also to the technique of intermittently applying a coating liquid to other type of base material travelling continuously in a roll-to-roll process. For example, the technique according to the present invention is applicable when a coating liquid containing a positive or negative active material is intermittently applied to a metal foil that functions as a collector of lithium-ion rechargeable batteries, with the metal foil travelling continuously in a roll-to-roll process. The technique according to the present invention is also applicable when a coating liquid is intermittently applied to a resin film of, for example, PEN or PET to form a functional layer, with the resin film travelling continuously in a roll-to-roll process. The application of the technique according to the present invention to the technique of intermittently applying a catalyst ink to the electrolyte membrane 2 of a fuel cell is preferable in that the catalyst ink can be suitably applied to the coating area and a loss of a catalyst ink containing expensive platinum as catalyst particles can be eliminated or reduced.

The present invention is applicable to an intermittent coating technique of intermittently applying a coating liquid to a base material, with the base material travelling continuously in a roll-to-roll process and, in particular, is preferably applicable to the technique of intermittently applying a catalyst ink containing platinum as catalyst particles to an electrolyte membrane to produce a catalyst-coated membrane.

While the invention has been described in detail, the foregoing description is in all aspects illustrative and not restrictive. It is understood that numerous other modifications and variations can be devised without departing from the scope of the invention.

## Claims

1. An intermittent coating method of intermittently applying a coating liquid to a base material sent out from a first roller (11) while causing said base material to travel continuously by winding the base material around a second roller (12), the method comprising the steps of:
(a) bringing (S2) a slit nozzle (20) having a liquid pool (81) of a coating liquid at its tip to be close to said base material supported on a backup roller (15), in which a spacing between said tip of said slit nozzle (20) and a front surface of said base material is a first spacing (SG) with which said liquid pool (81) comes into contact with the front surface of said base material;
(b) moving (S3) said slit nozzle (20) such that the spacing between said tip of said slit nozzle (20) and the front surface of said base material is equal to a second spacing (TG) different from said first spacing (SG) after said liquid pool (81) comes into contact with the front surface of said base material; and
(c) applying (S4) a coating liquid to the front surface of said base material from said slit nozzle (20) while keeping the spacing between said tip of said slit nozzle (20) and the front surface of said base material at said second spacing (TG,
wherein
said first spacing (SG) in said step (a) is set to become larger and the liquid pool (81) formed at the tip of said slit nozzle (20) in said step (a) becomes larger with a larger film thickness of a coating (8) formed on the front surface of said base material in said step (c).

2. The intermittent coating method according to claim 1, wherein said first spacing (SG) is set to be larger than said second spacing (TG) when said film thickness of the coating (8) formed on the front surface of said base material in said step (c) is larger than a predetermined value.

3. The intermittent coating method according to claim 1, wherein said first spacing (SG) in said step (a) is set to become larger with a lower front surface tension of the coating liquid.

4. The intermittent coating method according to claim 3, wherein said first spacing (SG) is set to be larger than said second spacing (TG) when the front surface tension of the coating liquid is lower than a predetermined value.

5. The intermittent coating method according to any one of claims 1 to 4, wherein at the completion of said step (c), said slit nozzle (20) is moved (S5) such that the spacing between said tip of said slit nozzle (20) and the front surface of said base material is equal to a third spacing (EG) smaller than said second spacing (TG).

6. The intermittent coating method according to any one of claims 1 to 5, wherein
said base material is an electrolyte membrane (2) for a fuel cell, and
said coating liquid is a catalyst ink containing catalyst particles of platinum or platinum alloy.

7. An intermittent coating apparatus (100) that is configured to intermittently apply a coating liquid to a base material sent out from a first roller (11) while being configured to cause said base material to travel continuously by winding the base material around a second roller (12), the apparatus (100) comprising:
a backup roller (15) that is configured to support said base material running;
a slit nozzle (20) that is configured to apply a coating liquid to said base material supported on said backup roller (15);
a drive part that is configured to move said slit nozzle (20) to be close to or apart from said backup roller (15); and
a control part (90) that is configured to control said drive part, said control part (90) being configured to control said drive part to cause said slit nozzle (20) to apply the coating liquid to the front surface of the base material by bringing said slit nozzle (20) having a liquid pool (81) of the coating liquid formed at its tip to be close to said base material supported on said backup roller (15) such that the spacing between said tip of said slit nozzle (20) and the front surface of said base material is equal to a first spacing (SG), with which said liquid pool (81) comes into contact with the front surface of said base material, and by moving said slit nozzle (20) such that the spacing between said tip of said slit nozzle (20) and the front surface of said base material is equal to a second spacing (TG) different from said first spacing (SG) after said liquid pool (81) comes into contact with the front surface of said base material,
wherein said control part is further configured to set said first spacing (SG) to become larger and to set the liquid pool (81) formed at the tip of said slit nozzle (20) to become larger with a larger film thickness of a coating (8) formed on the surface of said base material by applying a coating liquid from said slit nozzle (20) while keeping the spacing between said tip of said slit nozzle (20) and the front surface of said base material at said second spacing (TG).

8. The intermittent coating apparatus (100) according to claim 7, wherein the control part (90) is configured to set said first spacing (SG) to be larger than said second spacing (TG) when the film thickness of the coating (8) formed on the front surface of said base material is larger than a predetermined value.

9. The intermittent coating apparatus (100) according to claim 7, wherein the control part (90) is configured to set said first spacing (SG) to be become larger with a lower front surface tension of the coating liquid.

10. The intermittent coating apparatus (100) according to claim 9, wherein the control part (90) is configured to set said first spacing (SG) to be larger than said second spacing (TG) when the front surface tension of the coating liquid is lower than a predetermined value.

11. The intermittent coating apparatus (100) according to any one of claims 7 to 10, wherein at the completion of coating from said slit nozzle (20), said control part (90) is configured to control said drive part to move said slit nozzle (20) such that the spacing between said tip of said slit nozzle (20) and the front surface of said base material is equal to a third spacing (EG) smaller than said second spacing (TG).

12. The intermittent coating apparatus (100) according to any one of claims 7 to 11, wherein
said base material is an electrolyte membrane (2) of a fuel cell, and
said coating liquid is a catalyst ink containing catalyst particles of platinum or platinum alloy.

## Patentansprüche

1. Verfahren zum intermittierenden Beschichten durch intermittierendes Aufbringen einer Beschichtungsflüssigkeit auf ein von einer ersten Rolle (11) ausgegebenes Basismaterial, während durch Aufwickeln des Basismaterials auf eine zweite Rolle (12) bewirkt wird, dass sich das Basismaterial kontinuierlich bewegt, wobei das Verfahren folgende Schritte aufweist:
(a) Bringen (S2) einer Schlitzdüse (20) mit einer Flüssigkeitsmenge (81) einer Beschichtungsflüssigkeit an ihrer Spitze nahe an das auf einer Stützrolle (15) gehaltene Basismaterial, wobei ein Abstand zwischen der Spitze der Schlitzdüse (20) und einer Vorderseite des Basismaterials ein erster Abstand (SG) ist, mit dem die Flüssigkeitsmenge (81) in Kontakt mit der Vorderseite des Basismaterials kommt;
(b) Bewegen (S3) der Schlitzdüse (20) derart, dass der Abstand zwischen der Spitze der Schlitzdüse (20) und der Vorderseite des Basismaterials gleich einem von dem ersten Abstand (SG) verschiedenen zweiten Abstand (TG) ist, nachdem die Flüssigkeitsmenge (81) in Kontakt mit der Vorderseite des Basismaterials kommt; und
(c) Aufbringen (S4) einer Beschichtungsflüssigkeit von der Schlitzdüse (20) auf die Vorderseite des Basismaterials, während der Abstand zwischen der Spitze der Schlitzdüse (20) und der Vorderseite des Basismaterials bei dem zweiten Abstand (TG) gehalten wird,
wobei
der erste Abstand (SG) in dem Schritt (a) so eingestellt wird, dass er größer wird, wobei die in dem Schritt (a) an der Spitze der Schlitzdüse (20) gebildete Flüssigkeitsmenge (81) mit größerer Filmdicke einer in dem Schritt (c) auf der Vorderseite des Basismaterials gebildeten Beschichtung (8) größer wird.

2. Verfahren zum intermittierenden Beschichten nach Anspruch 1, wobei der erste Abstand (SG) so eingestellt wird, dass er größer als der zweite Abstand (TG) ist, wenn die Filmdicke der in dem Schritt (c) auf der Vorderseite des Basismaterials gebildeten Beschichtung (8) größer als ein vorbestimmter Wert ist.

3. Verfahren zum intermittierenden Beschichten nach Anspruch 1, wobei der erste Abstand (SG) in dem Schritt (a) so eingestellt wird, dass er mit einer niedrigeren Vorderseitenspannung der Beschichtungsflüssigkeit größer wird.

4. Verfahren zum intermittierenden Beschichten nach Anspruch 3, wobei der erste Abstand (SG) so eingestellt wird, dass er größer als der zweite Abstand (TG) ist, wenn die Vorderseitenspannung der Beschichtungsflüssigkeit niedriger als ein vorbestimmter Wert ist.

5. Verfahren zum intermittierenden Beschichten nach einem der Ansprüche 1 bis 4, wobei bei der Beendigung des Schritts (c) die Schlitzdüse (20) so bewegt (S5) wird, dass der Abstand zwischen der Spitze der Schlitzdüse (20) und der Vorderseite des Basismaterials gleich einem dritten Abstand (EG) ist, der kleiner als der zweite Abstand (TG) ist.

6. Verfahren zum intermittierenden Beschichten nach einem der Ansprüche 1 bis 5, wobei
das Basismaterial eine Elektrolytmembran (2) für eine Brennstoffzelle ist und
die Beschichtungsflüssigkeit eine Katalysatortinte ist, die Katalysatorpartikel aus Platin oder Platinlegierung enthält.

7. Vorrichtung (100) zum intermittierenden Beschichten, die ausgebildet ist, intermittierend eine Beschichtungsflüssigkeit auf ein von einer ersten Rolle (11) ausgegebenes Basismaterial aufzubringen, während sie ausgebildet ist, durch Aufwickeln des Basismaterials auf eine zweite Rolle (12) zu bewirken, dass sich das Basismaterial kontinuierlich bewegt, wobei die Vorrichtung (100) aufweist:
eine Stützrolle (15), die ausgebildet ist, das laufende Basismaterial zu halten;
eine Schlitzdüse (20), die ausgebildet ist, eine Beschichtungsflüssigkeit auf das auf der Stützrolle (15) gehaltene Basismaterial aufzubringen;
einen Antriebsteil, der ausgebildet ist, die Schlitzdüse (20) nahe an die Stützrolle (15) oder von ihr weg zu bewegen; und
einen Steuerteil (90), der ausgebildet ist, den Antriebsteil zu steuern, wobei der Steuerteil (90) ausgebildet ist, den Antriebsteil so zu steuern, dass die Schlitzdüse (20) veranlasst wird, die Beschichtungsflüssigkeit auf die Vorderseite des Basismaterials aufzubringen, indem die Schlitzdüse (20) mit einer an ihrer Spitze gebildeten Flüssigkeitsmenge (81) der Beschichtungsflüssigkeit derart nahe an das auf der Stützrolle (15) gehaltene Basismaterial gebracht wird, dass der Abstand zwischen der Spitze der Schlitzdüse (20) und der Vorderseite des Basismaterials gleich einem ersten Abstand (SG) ist, mit dem die Flüssigkeitsmenge (81) in Kontakt mit der Vorderseite des Basismaterials kommt, und indem die Schlitzdüse (20) so bewegt wird, dass der Abstand zwischen der Spitze der Schlitzdüse (20) und der Vorderseite des Basismaterials gleich einem von dem ersten Abstand (SG) verschiedenen zweiten Abstand (TG) ist, nachdem die Flüssigkeitsmenge (81) in Kontakt mit der Vorderseite des Basismaterials kommt,
wobei der Steuerteil ferner ausgebildet ist, den ersten Abstand (SG) so einzustellen, dass er größer wird, wobei die an der Spitze der Schlitzdüse (20) gebildete Flüssigkeitsmenge (81) so eingestellt wird, dass sie mit einer größeren Filmdicke einer auf der Oberfläche des Basismaterials durch Aufbringen einer Beschichtungsflüssigkeit aus der Schlitzdüse (20) gebildeten Beschichtung (8) größer wird, während der Abstand zwischen der Spitze der Schlitzdüse (20) und der Vorderseite des Basismaterials bei dem zweiten Abstand (TG) gehalten wird.

8. Vorrichtung (100) zum intermittierenden Beschichten nach Anspruch 7, wobei der Steuerteil (90) ausgebildet ist, den ersten Abstand (SG) so einzustellen, dass er größer als der zweite Abstand (TG) ist, wenn die Filmdicke der in dem Schritt (c) auf der Vorderseite des Basismaterials gebildeten Beschichtung (8) größer als ein vorbestimmter Wert ist.

9. Vorrichtung (100) zum intermittierenden Beschichten nach Anspruch 7, wobei der Steuerteil (90) ausgebildet ist, den ersten Abstand (SG) so einzustellen, dass er mit einer niedrigeren Vorderseitenspannung der Beschichtungsflüssigkeit größer wird.

10. Vorrichtung (100) zum intermittierenden Beschichten nach Anspruch 9, wobei der Steuerteil (90) ausgebildet ist, den ersten Abstand (SG) so einzustellen, dass er größer als der zweite Abstand (TG) ist, wenn die Vorderseitenspannung der Beschichtungsflüssigkeit niedriger als ein vorbestimmter Wert ist.

11. Vorrichtung (100) zum intermittierenden Beschichten nach einem der Ansprüche 7 bis 10, wobei der Steuerteil (90) ausgebildet ist, bei der Beendigung des Beschichtens aus der Schlitzdüse (20) den Antriebsteil zu steuern, die Schlitzdüse (20) so zu bewegen, dass der Abstand zwischen der Spitze der Schlitzdüse (20) und der Vorderseite des Basismaterials gleich einem dritten Abstand (EG) ist, der kleiner als der zweite Abstand (TG) ist.

12. Vorrichtung (100) zum intermittierenden Beschichten nach einem der Ansprüche 7 bis 11, wobei
das Basismaterial eine Elektrolytmembran (2) einer Brennstoffzelle ist und
die Beschichtungsflüssigkeit eine Katalysatortinte ist, die Katalysatorpartikel aus Platin oder Platinlegierung enthält.

## Revendications

1. Procédé d'application intermittente de revêtement pour appliquer de manière intermittente un liquide de revêtement à un matériau de base émis à partir d'un premier rouleau (11) tout en amenant ledit matériau de base à se déplacer de manière continue en enroulant le matériau de base autour d'un second rouleau (12), le procédé comprenant les étapes suivantes :
(a) amener (S2) une buse fendue (20) ayant un réservoir de liquide (81) d'un liquide de revêtement au niveau de sa pointe, à se rapprocher dudit matériau de base supporté sur un rouleau de support (15), dans lequel un espacement entre ladite pointe de ladite buse fendue (20) et une surface avant dudit matériau de base est un premier espacement (SG) avec lequel ledit réservoir de liquide (81) vient en contact avec la surface avant dudit matériau de base ;
(b) déplacer (S3) ladite buse fendue (20) de sorte que l'espacement entre ladite pointe de ladite buse fendue (20) et la surface avant dudit matériau de base est égal à un deuxième espacement (TG) différent dudit premier espacement (SG) après que ledit réservoir de liquide (81) est venu en contact avec la surface avant dudit matériau de base ; et
(c) appliquer (S4) un liquide de revêtement à la surface avant dudit matériau de base à partir de ladite buse fendue (20) tout en maintenant l'espacement entre ladite pointe de ladite buse fendue (20) et la surface avant dudit matériau de base au niveau dudit deuxième espacement (TG),
dans lequel :
ledit premier espacement (SG) à ladite étape (a) est déterminé pour s'agrandir et le réservoir de liquide (81) formé au niveau de la pointe de ladite buse fendue (20) à l'étape (a) s'agrandit avec une plus grande épaisseur de film d'un revêtement (8) formé sur la surface avant dudit matériau de base à ladite étape (c).

2. Procédé d'application intermittente d'un revêtement selon la revendication 1, dans lequel ledit premier espacement (SG) est déterminé pour devenir plus grand que ledit deuxième espacement (TG) lorsque ladite épaisseur de film du revêtement (8) formée sur la surface avant dudit matériau de base à ladite étape (c) est plus grande qu'une valeur prédéterminée.

3. Procédé d'application intermittente d'un revêtement selon la revendication 1, dans lequel ledit premier espacement (SG) à ladite étape (a) est déterminé pour devenir plus grand avec une tension de surface avant plus petite du liquide de revêtement.

4. Procédé d'application intermittente d'un revêtement selon la revendication 3, dans lequel ledit premier espacement (SG) est déterminé pour être plus grand que ledit deuxième espacement (TG) lorsque la tension de surface avant du liquide de revêtement est inférieure à une valeur prédéterminée.

5. Procédé d'application intermittente d'un revêtement selon l'une quelconque des revendications 1 à 4, dans lequel, à la fin de ladite étape (c), ladite buse fendue (20) est déplacée (S5) de sorte que l'espacement entre ladite pointe de ladite buse fendue (20) et la surface avant dudit matériau de base est égal à un troisième espacement (EG) plus petit que ledit deuxième espacement (TG).

6. Procédé d'application intermittente d'un revêtement selon l'une quelconque des revendications 1 à 5, dans lequel :
ledit matériau de base est une membrane d'électrolyte (2) pour une pile à combustible, et
ledit liquide de revêtement est une encre catalytique contenant des particules catalytiques de platine ou d'un alliage de platine.

7. Appareil d'application intermittente d'un revêtement (100) qui est configuré pour appliquer, de manière intermittente un liquide de revêtement à un matériau de base, émis à partir d'un premier rouleau (11) tout en étant configuré pour amener ledit matériau de base à se déplacer de manière continue en enroulant le matériau de base autour d'un second rouleau (12), l'appareil (100) comprenant :
un rouleau de support (15) qui est configuré pour supporter ledit matériau de base qui s'étend ;
une buse fendue (20) qui est configurée pour appliquer un liquide de revêtement audit matériau de base supporté sur ledit rouleau de support (15) ;
une partie d'entraînement qui est configurée pour déplacer ladite buse fendue (20) afin qu'elle s'approche ou s'éloigne dudit rouleau de support (15) ; et
une partie de commande (90) qui est configurée pour commander ladite partie d'entraînement, ladite partie de commande (90) étant configurée pour commander ladite partie d'entraînement pour amener ladite buse fendue (20) à appliquer le liquide de revêtement à la surface avant du matériau de base en amenant ladite buse fendue (20) ayant un réservoir de liquide (81) du liquide de revêtement formé au niveau de sa pointe, à se rapprocher dudit matériau de base supporté sur ledit rouleau de support (15) de sorte que l'espacement entre ladite pointe de ladite buse fendue (20) et la surface avant dudit matériau de base est égal à un premier espacement (SG), avec lequel ledit réservoir de liquide (81) vient en contact avec la surface avant dudit matériau de base, et en déplaçant ladite buse fendue (20) de sorte que l'espacement entre ladite pointe de ladite buse fendue (20) et la surface avant dudit matériau de base est égal à un deuxième espacement (TG) différent dudit premier espacement (SG) après que ledit réservoir de liquide (81) est venu en contact avec la surface avant dudit matériau de base,
dans lequel ladite partie de commande est en outre configurée pour amener ledit premier espacement (SG) à devenir plus grand et pour amener le réservoir de liquide (81) formé au niveau de la pointe de ladite buse fendue (20) à devenir plus grand avec une plus grande épaisseur de film d'un revêtement (8) formé sur la surface dudit matériau de base en appliquant un liquide de revêtement à partir de ladite buse fendue (20) tout en maintenant l'espacement entre ladite pointe de ladite buse fendue (20) et la surface avant dudit matériau de base au niveau dudit deuxième espacement (TG).

8. Appareil d'application intermittente d'un revêtement (100) selon la revendication 7, dans lequel la partie de commande (90) est configurée pour amener ledit premier espacement (SG) à devenir plus grand que ledit deuxième espacement (TG) lorsque l'épaisseur de film du revêtement (8) formé sur la surface avant dudit matériau de base est plus grande qu'une valeur prédéterminée.

9. Appareil d'application intermittente d'un revêtement (100) selon la revendication 7, dans lequel la partie de commande (90) est configurée pour amener ledit premier espacement (SG) à s'agrandir avec une tension de surface avant plus petite du liquide de revêtement.

10. Appareil d'application intermittente d'un revêtement (100) selon la revendication 9, dans lequel la partie de commande (90) est configurée pour amener le premier espacement (SG) à être plus grand que ledit deuxième espacement (TG. lorsque la tension de surface avant du liquide de revêtement est plus petite qu'une valeur prédéterminée.

11. Appareil d'application intermittente d'un revêtement (100) selon l'une quelconque des revendications 7 à 10, dans lequel à la fin de l'application de revêtement à partir de ladite buse fendue (20), ladite partie de commande (90) est configurée pour commander ladite partie d'entraînement pour déplacer ladite buse fendue (20) de sorte que l'espacement entre ladite pointe de ladite buse fendue (20) et la surface avant dudit matériau de base est égal à un troisième espacement (EG) inférieur audit deuxième espacement (TG).

12. Appareil d'application intermittente d'un revêtement (100) selon l'une quelconque des revendications 7 à 11, dans lequel :
ledit matériau de base est une membrane électrolytique (2) d'une pile à combustible, et
ledit liquide de revêtement est une encre catalytique contenant des particules catalytiques de platine ou d'alliage ce platine.
